Europäisches Patentamt

(19) European Patent Office

Office européen des brevets

(11) Publication number : **0 313 155 B1**

(12) **EUROPEAN PATENT SPECIFICATION**

(45) Date of publication of patent specification :
**02.01.92 Bulletin 92/01**

(21) Application number : **88202297.3**

(22) Date of filing : **14.10.88**

(51) Int. Cl.⁵ : **B29C 67/14,** B29C 31/06

(54) **Process for producing moulded articles.**

(30) Priority : **19.10.87 NL 8702487**

(43) Date of publication of application :
**26.04.89 Bulletin 89/17**

(45) Publication of the grant of the patent :
**02.01.92 Bulletin 92/01**

(84) Designated Contracting States :
**AT BE CH DE ES FR GB GR IT LI NL SE**

(56) References cited :
**EP-A- 0 062 991**
**EP-A- 0 073 708**
**EP-A- 0 128 826**
**FR-A- 2 088 413**
**US-A- 2 302 918**
**US-A- 3 752 728**
**US-A- 3 957 943**
**US-A- 4 133 711**

(73) Proprietor : **DSM N.V.**
**Het Overloon 1**
**NL-6411 TE Heerlen (NL)**

(72) Inventor : **Dorrestijn, Antoon**
**Berkenstraat 3**
**NL-6127 CK Born (NL)**
Inventor : **Verbraak, Cornelis Pieter Johannes**
**Marinus**
**Planetenhof 87**
**NL-6215 TT Maastricht (NL)**
Inventor : **Kraanen, Willem Peter Mario**
**Robert Graaflandstraat 32**
**NL-6137 CP Sittard (NL)**

(74) Representative : **Hoogstraten, Willem Cornelis**
**Roeland et al**
**OCTROOIBUREAU DSM Postbus 9**
**NL-6160 MA Geleen (NL)**

## Description

The invention relates to a process for producing moulded articles by cutting a sheet-shaped product comprising a thermosetting resin, fillers and fibrous material into a desired shape, laying it in a mould and curing it at elevated temperature and pressure.

The production of moulding compounds with apertures as laid out in the preamble of claim 1 is known from FR-A-7111218, in which strips of fibre reinforced material are placed in a mould side by side.

The above process is frequently applied in processing sheet-shaped products, or 'Sheet Moulding Compounds' (SMC). An SMC is a compound of a thermosetting mixture, usually based on an unsaturated polyester resin and a vinylaromatic monomer, fibrous material and fillers, which mixture is thickened with, for instance, magnesium oxide to form a non-tacky product. Other thickened moulding compounds are, for instance, 'Dough' or 'Bulk Moulding Compounds' (DMC or BMC). The latter have the disadvantage that the reinforcing material is only short-fibred, because the fibres will break in the processing of these materials.

In the processing of SMCs there will be little or no breaking of fibres, so that optimum mechanical properties can be obtained.

A major problem in the processing of SMCs is that process automation is difficult. As such it is possible from SMCs always to cut parts that can be laid in a mould. In the process up to 20% waste is formed. Another problem is that an SMC does not have the same weight everywhere, so that in the automatic cutting a variation in weight arises of more than 10%. The tolerance in respect of the variation in weight is typically 100 to 103% moulding charge, that is why in practice the weight is adjusted by hand. The variation in weight is caused, among other things, by glass fibres, which do not everywhere have the same weight per unit of length, a not altogether perfect distribution of the fillers, a slight pressing away of the compound in the storage of the SMC and similar hard-to-control effects.

In Kunststoffe 76 (1986) 11 pp. 1044-1048 it is described, that the problem caused by the fill-weight can be solved by placing on top of each other several sheets of SMC, each time weighing the sheets and to correct the deviation of the weight by adjusting the length of the sheet that is cut off next. However, the use of complete SMC-sheets for the production of products that have an aperture, gives rise to the problem of flow-lines during moulding, which results in weak spots in the end-product.

The invention provides a solution for this problem.

The invention relates to a process for the production of moulded articles with apertures by cutting a sheet-shaped product comprising a thermosetting resin, fillers and fibrous material into a desired shape, laying it in a mould and curing it at elevated temperature and pressure, and is characterized in that the sheet-shaped product is divided into strips and that a plurality of strips are placed with overlap around the aperture together in a desired amount by an automatically controlled machine, the desired amount by weight is reached by adjusting the length of the strips.

By applying the process according to the invention it is possible to raise the reproducibility of the resulting products, it being a particular advantage that no flow lines are formed and that no waste is formed in the production process.

The process according to the invention can be carried out with particular advantage by laying the strips together outside the mould (the preform) and weighing the whole of it. By changing for instance the length of the last strip, which preferably constitutes on average less than 10% of the total weight, it is easy to reduce the difference in weight to below 1%.

It is a particular advantage to apply an iterative weight adjustment by, for instance, so changing the lengths of at least the two final strips, or particularly of all strips, that the desired weight is obtained. The last strip then preferably constitutes less than 5% of the total weight. If the lengths of all strips are adjusted to the variations in weight, such adjustments are homogeneously distributed over the mould.

It may be an advantage to make the whole process automatic by having all strips laid down by a machine, because such will result in a highly flexible process operation. However, it may be conceivable also to save time by, for instance, laying on a preform a part of an SMC constituting 50-90% (wt) of the desired amount of moulding compound, with the last 10-50% (wt) being laid down by an automatically controlled machine in exactly the desired amount.

The advantage of the process according to the invention is that in a simple manner parts of SMCs can be applied at desired places resulting in special properties. In this connection it is important in the first place to use SMCs with unidirectional fibres, but SMCs with a very high filler content, with a resin curable to form a flexible product or with parts having a good surface quality can also be used to advantage.

The size of the strips is normally not critical. With a random orientation of the fibres the width will preferably be greater than the average length of the fibres, because otherwise the strength will decrease. As described above, it is important for the last strip or strips to be so chosen as to cause the prevailing variation in weight

2

to be adjusted.

Another variable causing problems in the production of moulded articles is the variation in density. The density of SMCs has been found in practice to be liable to variation. If the density increases, the volume of the moulding compound introduced into a mould will be too small for all edges and projections of the mould to be filled. Now, by placing for instance pressure sensors at one or more critical points in the mould, or for instance by measuring the amount of pressure exerted, a signal can be given to the automatically controlled machine to slightly increase the weight of the fill so that the excess density can be corrected. If too high a pressure is measured, the weight of the fill can be reduced. In this way it is possible to adjust deviations of the wanted volume (outside the tolerance-boundary) in a next cycle.

It is a great advantage for the SMC strips in the preform to be introduced into a mould with automatically controlled suction cups or needles, upon which the article can be moulded. It is in principle also possible for the strips of SMC to be laid in the mould one by one direct, but a disadvantage may then be the possible premature curing of the resin under the influence of the heat.

The invention will be further elucidated with reference to the following figures.

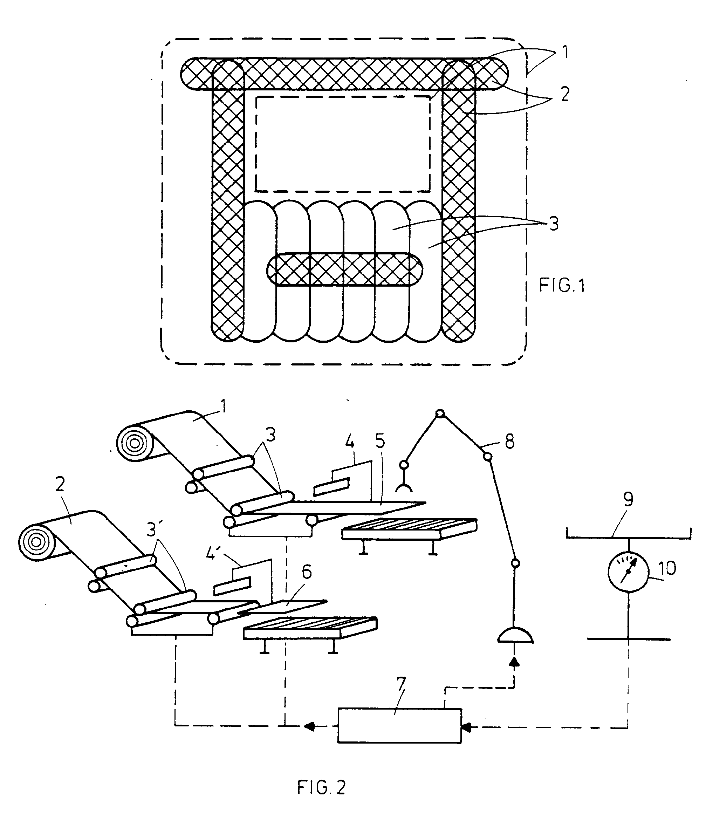

Figure 1 is a diagrammatic representation of strips arranged in preform. In it (1) is a projection of the mould in which the strips are to be laid. (2) shows the strips of SMC with unidirectional fibre reinforcement and (3) the strips of SMC with random distribution of the fibres. In order to avoid the formation of flow lines, which have only 1/10 of the strength, it is to be recommended to cause the strips to overlap.

Figure 2 is a diagrammatic representation of a composition of devices for carrying out the process according to the invention. In it (1) is a roll of SMC with unidirectional fibre reinforcement, (2) a roll with random distribution of the reinforcing fibres, (3) and (3') pairs of rollers to determine and steer the lengths of the strips of SMC to be cut off, (4) and (4') cutting devices, (5) a strip of SMC to be cut off and (6) a strip of SMC cut off. The computer charged with the data processing and control of everything is shown at (7). The robot (8) which lays cut strips (e.g. (6)) on the work table (9) will always do so, controlled by computer (7), at a predetermined place so that a preform is formed. The work table (9) comprises a weighing device linked with computer (7). The weighing device need not in itself be connected with the work table. The strips can in principle always all of them be weighed before being placed on the work table, because this data will suffice for the computer. If the mould is provided with pressure sensors, computer (7) will be connected also with the sensors in order to correct the density there.

The invention will be further elucidated by means of the following examples without being limited thereto.

Examples I-III and comparative experiments A and B

An SMC having a thickness of 1.8 mm was made from : 60 parts of resin made from polypropylene glycol and maleic anhydride, 65% solution in styrene ; 40 parts LPA : 65% polystyrene solution in styrene ; 180 parts of calcium carbonate ; 10 parts of grey pigment paste ; 4 parts of magnesium oxide paste (35% MgO) ; 115 parts of tert. butyl perbenzoate ; 100 parts of glass fibre (length 25 mm).

From the SMC the strips were cut mentioned in the table. In a mould strips were laid as shown in the table and test sheets were moulded measuring $25 \times 25 \times 0.2$ cm.

The moulding conditions were :

```
temperature top plate    : 147¤C;
temperature bottom plate: 143¤C;
moulding pressure        : 80 bar;
closing time        -    : 9s;
moulding time            : 5 min;
opening time             : 5s.
```

From the sheets test bars were sawn for impact resistance measurements ('Charpy' according to ISO-179, using 2-mm instead of 4-mm-thick test bars) and flexural strength measurements (according to ISO-178). Results mentioned in the table.

TABLE

|  | I | II | III | A | B* |
|---|---|---|---|---|---|
| strips |  |  |  |  |  |
| length x width (cm) | 20 x 5 | 24 x 5 | 24 x 8 | 20 x 5 | (20 x 20) |
| number of strips** | 4 x 2 | 6 x 1 | 4 x 1 | 4 x 2 | 1 x 2 |
| overlap (cm) | 2.5 | 3.5 | 6.5 | 0 | 20 |
| Charpy (KJ/m$^2$) | 35 | 33 | 47 | 5 | 60 |
| Flexural strength (MPa) | 157 | 143 | 159 | 127 | 169 |

\*   In this experiment complete sheets were used.

\*\*   The first figure shows the number of strips laid side by side with or without overlap, the second figure the number of layers laid one on top of the other.

The experiments show that the maximum impact resistance to be reached (in experiment B) is around 60 KJ/m$^2$. By cutting the SMC into strips, so that automation becomes possible, the impact resistance decreases by 20-40%. However, in respect of experiment A, where flow lines determine the impact resistance, it increases (as a result of the overlap) by a factor of 7 to 9. This is very important in actual practice, because, as indicated also in, for instance, figure 1, recesses are often desired in moulded articles. These are made either afterwards, which involves a good deal of work (drilling, sawing, finishing), or previously. In the latter case normally only such part of the mould is filled as can contain a large sheet, and during the moulding the SMC will flow round the recess. The flow line formed in such process is relatively weak, because it is in fact the impact resistance of the pure resin (without glass fibre) that is measured.

## Claims

1. Process for producing moulded articles with apertures by cutting a sheet-shaped product comprising a thermosetting resin, fillers and fibrous material into a desired shape, laying it in a mould (1) and curing it at elevated temperature and pressure, the process being characterized in that the sheet-shaped product is divided into strips (2) and that a plurality of strips (2) are placed with overlap around the aperture together in a desired amount by an automatically controlled machine, the desired amount by weight is reached by adjusting the lengths of the strips.

2. Process according to claim 1, characterized in that the strips (2) are placed together outside the mould (1) and the whole is put in a mould (1).

3. Process according to any one of claims 1-2, characterized in that a part of the strips (2) comprises unidirectional reinforcing fibre material.

4. Process according to any one of claims 1-3, characterized in that with a random distribution of the fibre reinforcement the strips are wider than the average length of the fibres.

5. Process according to any one of claims 1-4, characterized in that sensors in the mould (1) measure the volume of the material that is brought into the mould, and that in case of deviations from the wanted volume in a following cyclus the volume is corrected.

## Patentansprüche

1. Verfahren zum Herstellen von mit Öffnungen versehenen geformten Gegenständen, bei dem ein plattenförmiges Produkt, welches ein duroplastisches Harz, Füllstoffe und Fasermaterial enthält, in eine gewünschte Fasson geschnitten, in eine Form (1) gelegt und bei erhöhter Temperatur und erhöhtem Druck ausgehärtet wird, welches Verfahren dadurch gekennzeichnet ist, daß das plattenförmige Produkt in Streifen (2) geteilt wird und daß mit einer automatisch gesteuerten Maschine eine Mehrzahl von Streifen (2), die miteinander eine gewünschte Menge bilden, überlappend rund um die Öffnung angeordnet wird, wobei die gewünschte Gewichtsmenge durch Einstellen der Längen der Streifen erreicht wird.

2. Verfahren nach Anspruch 1, dadurch gekennzeichnet, daß die Streifen (2) miteinander außerhalb der Form (1) angeordnet werden und das Ganze in eine Form (1) gegeben wird.

3. Verfahren nach irgendeinem der Ansprüche 1-2, dadurch gekennzeichnet, daß ein Teil der Streifen (2) in einer Richtung ausgerichtetes Verstärkungsfasermaterial enthält.

4. Verfahren nach irgendeinem der Ansprüche 1-3, dadurch gekennzeichnet, daß die Streifen mit einer Zufallsverteilung der Faserverstärkung breiter als die mittlere Länge der Fasern sind.

5. Verfahren nach irgendeinem der Ansprüche 1-4, dadurch gekennzeichnet, daß Sensoren in der Form (1) das Volumen des Materials, das in die Form eingebracht wird, messen und daß im Fall von Abweichungen vom gewünschten Volumen das Volumen in einem nachfolgenden Zyklus korrigiert wird.

## Revendications

1. Procédé pour fabriquer des articles moulés avec des ouvertures en découpant un produit en forme de feuille comprenant une résine thermodurcissable, des matériaux de remplissage et de la matière fibreuse sous une forme souhaitée, en le déposant dans un moule (1) et en le traitant à température et pression élevées, le procédé étant caractérisé en ce que le produit en forme de feuille est divisé en bandes (2) et en ce qu'une pluralité de bandes (2) sont placées ensemble avec chevauchement autour de l'ouverture en quantité souhaitée par un dispositif à commande automatique, la quantité souhaitée en poids est atteinte en ajustant les longueurs des bandes.

2. Procédé selon la revendication 1, caractérisé en ce que les bandes (2) sont placées ensemble à l'extérieur du moule (1) et l'ensemble est mis dans un moule (1).

3. Procédé selon l'une quelconque des revendications 1-2, caractérisé en ce qu'une partie de bandes (2) comprend un matériau fibreux de renforcement unidirectionnel.

4. Procédé selon l'une quelconque des revendications 1-3 caractérisé en ce qu' avec une répartition aléatoire du renforcement fibreux les bandes sont plus larges que la longueur moyenne des fibres.

5. Procédé selon l'une quelconque des revendications 1-4, caractérisé en ce que des capteurs dans le moule (1) mesurant le volume de matériau qui est apporté dans le moule, et en ce que dans le cas d'écarts avec le volume souhaité le volume est corrigé dans un cycle suivant.

FIG.1

FIG. 2